# EUROPÄISCHE PATENTSCHRIFT

(11) **EP 0 873 891 B1**
(45) Veröffentlichungstag und Bekanntmachung des Hinweises auf die Patenterteilung: **31.07.2002**
(21) Anmeldenummer: 98105570.0
(22) Anmeldetag: 27.03.1998
(51) Int. Cl.: B60G 3/20, B60G 3/26

(54) **Einzelradaufhängung für gelenkte Räder von Kraftfahrzeugen, insbesondere Personenkraftwagen**
Independent suspension for steered wheels of motor vehicles, especially passenger vehicles
Suspension indépendante pour roues directrices de véhicules à moteur, en particlierr de voitures automobiles

(30) Priorität: 23.04.1997 DE 19717069
(43) Veröffentlichungstag der Anmeldung: 28.10.1998
(73) Patentinhaber: DaimlerChrysler AG, 70567 Stuttgart (DE)
(72) Erfinder: Brühl, Hubert, 73550 Waldstetten (DE)

(56) Entgegenhaltungen:
- EP-A- 0 849 103
- US-A- 4 591 184
- US-A- 4 828 279
- PATENT ABSTRACTS OF JAPAN vol. 017, no. 256 (M-1413), 20. Mai 1993 (1993-05-20) & JP 04 372408 A (NISSAN MOTOR CO LTD), 25. Dezember 1992 (1992-12-25)
- PATENT ABSTRACTS OF JAPAN vol. 1995, no. 05, 30. Juni 1995 (1995-06-30) & JP 07 047824 A (NISSAN MOTOR CO LTD), 21. Februar 1995 (1995-02-21)

## Beschreibung

Die Erfindung betrifft eine Einzelradaufhängung für gelenkte Räder von Kraftfahrzeugen, insbesondere Personenkraftwagen, in Form einer Drei-Lenker-Koppelachse.

Solche Drei-Lenker-Koppelachsen umfassen einen unteren Dreieckslenker, einen damit verbundenen Radträger, der an seinem oberen Ende über eine Sturzstrebe geführt ist, und eine Koppel, die den Radträger, versetzt zu dessen Anlenkung am Dreieckslenker, zusätzlich mit dem Dreieckslenker verbindet und dadurch quer zu der Ebene abstützt, die durch die Anlenkpunkte des Radträgers am Dreieckslenker und der Sturzstrebe am Radträger und an der Karosserie aufgespannt ist. Zur Ausrichtung des Rades ist der Radträger zusätzlich mit einem Spurhebel versehen, an dem eine Spurstange angelenkt ist, wobei das Rad über die Spurstange in Verbindung mit einem Lenkgetriebe aktiv gelenkt werden kann. In Bezug auf Lenkbewegungen wird bei einer solchen Drei-Lenker-Koppelachse eine Verschwenkung des Rades um eine virtuelle Achse vorgenommen, die sich als Schnittlinie zweier Ebenen darstellt, nämlich der bereits genannten, durch die Anlenkpunkte des Sturzlenkers und den Anlenkpunkt des Radträgers am Dreieckslenker bestimmte erste Ebene und eine zweite Ebene, die durch die Anlenkpunkte der Koppel an Radträger und Dreieckslenker und den Anlenkpunkt des Radträgers am Dreieckslenker aufgespannt ist. Bei Lenkbewegungen, die real durch Verschwenken des Radträgers und Verlagern seiner Anlenkpunkte erfolgen, wird das Rad durch die entsprechenden Verlagerungen somit in eine Lage gebracht, wie sie sich beim Verschwenken um die virtuelle Achse ergäbe. Da die virtuelle Achse durch die besagten Ebenen, nämlich die erste und die zweite Ebene aufgespannt ist und nicht durch die reellen Anlenkpunkte bestimmt ist, haben auch in diesen Ebenen wirkende phasenversetzte dynamische Kräfte der Einzellenker Momente um die reale Achse zur Folge. Solche dynamischen Kräfte sind in Bezug auf die Lenkruhe des Fahrzeuges kritisch und es sind dementsprechend derartige Radaufhängungen, wie sie beispielsweise aus der im Oberbegriff des Anspruches 1 gewürdigten JP 4 - 372 408 (A) bekannt sind, auch empfindlich im Hinblick auf Elastizitäten in den vielen Anlenkungen, die in einer solchen Radaufhängung vorhanden sind.

Bei dieser bekannten Radaufhängung ist darüber hinaus der Radträger in Frontansicht bei S-förmiger Krümmung verhältnismäßig stark nach innen gewölbt, so daß sich in Verbindung mit einer in Frontansicht aufrechten, in Seitenansicht aber deutlich nach vorne geneigten Koppel und mit in Frontansicht nahezu lotrecht übereinander liegenden Anlenkpunkten des Radträgers am Dreieckslenker und am Sturzlenker bei Neigung der durch diese Anlenkpunkte bestimmten reelen Lenkachse schräg nach hinten und oben ein verhältnismäßiger großer Raumbedarf für die Radaufhängung und bei Lenkbewegungen auch verhältnismäßig große räumliche Verlagerungen für einzelne Radführungselemente ergeben, was neben für die Radführung teilweise angestrebten Effekten wiederum Auswirkungen auf das Bauvolumen hat.

Aus der JP 07 047 824 A ist eine weitere Drei-Lenker-Koppelachse bekannt, und zwar für nicht gelenkte Räder von Personenkraftwagen, bei der der Radträger über einen unteren Dreieckslenker und einen oberen Sturzlenker geführt und zusätzlich durch eine Koppel gegenüber dem Dreieckslenker abgestützt ist. Weiter ist am Radträger ein Lenkspurhebel angebracht, der über eine in Querrichtung verlaufende Spurstange elastisch gegen die Karosserie abgestützt ist. Die Koppel erstreckt sich bei dieser Lösung ausgehend vom vorderen, inneren Endbereich des Dreieckslenkers schräg nach hinten oben gegen den Radträger, wobei die von den Anlenkpunkten zwischen Dreieckslenker, Radträger und Koppel aufgespannte zweite Ebene und die von den Anlenkpunkten des Sturzlenkers und dem Anlenkpunkt des Radträgers am Dreieckslenker bestimmte erste Ebene einander kreuzen und eine Schnittlinie aufweisen, die ausgehend von dem beiden Ebenen gemeinsamen Anlenkpunkt des Radträgers am Dreieckslenker auch im Bereich des Anlenkpunktes des Radträgers am Sturzlenker verläuft, so daß virtuelle und reele Lenkachse einen ähnlichen Verlauf und auch im Bereich des Anlenkpunktes des Sturzlenkers am Radträger keinen sehr großen Versatz haben. Dieser Versatz ist allerdings erwünscht, da diese für nicht gelenkte Räder vorgesehene Drei-Lenker-Koppelachse in Verbindung mit der elastischen Abstützung der Spurstange gegenüber der Karosserie durch Verschwenken des Radträgers unter dem Einfluß von Längs- und Seitenkräften Lenkeffekte zur Folge haben soll, nämlich unter dem Einfluß von Seitenkräften in Richtung Vorspur und unter dem Einfluß von Längskräften in Richtung Nachspur, die zu einer Stabilisierung des Fahrzeuges führen.

Der Erfindung liegt die Aufgabe zugrunde, eine Radaufhängung der eingangs genannten Art im Hinblick auf die dort geschilderten Nachteile und Empfindlichkeiten zu verbessern.

Gemäß der Erfindung wird dies durch die Merkmale des Anspruches 1 erreicht. Dadurch, daß die durch die Anlenkung des Radträgers am Dreieckslenker und die Anlenkungen des Sturzlenkers aufgespannte erste Ebene und die durch die Anlenkung des Radträgers am Dreieckslenker und die Anlenkungen der Koppel aufgespannte zweite Ebene eine Schnittlinie aufweisen, die ausgehend von dem beiden Ebenen gemeinsamen Anlenkpunkt des Radträgers am Dreieckslenker im oberen Bereich des Radträgers durch den Anlenkpunkt des Radträgers am Sturzlenker, zumindest aber benachbart zu diesem verläuft, fällt die virtuelle Lenkachse mit der Drehachse des Radträgers praktisch zusammen, so daß in den besagten Ebenen wirksame, insbesondere auch dynamisch wirksame Kräfte - also über den Sturzlenker und die Koppel wirkende Kräfte - immer auf die Lenkachse gerichtet sind, folglich keine Momente um die Lenkachse zur Folge haben, und damit auch weder Lenkunruhe erzeugen noch den Geradeauslauf beeinträchtigen. Dies wird bei der erfindungsgemäßen Lösung trotz in Fahrzeuglängsrichtung gedrungener Bauweise der Radaufhängung erreicht, wobei auch in Verbindung mit großen Lenkeinschlägen die einzelnen Radführungsglieder nur geringe Verlagerungen erfahren, so daß eine trotz möglicher großer Lenkeinschläge sehr kompakte Bauweise realisiert werden kann. Trotzdem wird mit größer werdenden Lenkeinschlägen eine gewisse Verlagerung der Lenkachse - im Sinne einer Vergrößerung der Nachlaufstrecke - im oberen Bereich nach hinten erreicht, so daß sich ein vergrößertes Rückstellmoment bei Lenkeinschlägen ergibt.

Im Hinblick auf ein möglichst vorteilhaftes Gesamtkonzept erweisen sich Ausgestaltungen der Radaufhängung als zweckmäßig, die in den Unteransprüchen beschrieben sind.

Die Erfindung wird im Folgenden anhand von Ausführungsbeispielen näher erläutert. Es zeigen:
- Figur 1: eine stark schematisierte, perspektivische Prinzipdarstellung einer gemäß der Erfindung als lenkbare Vorderradaufhängung konzipierten Einzelradaufhängung,
- Figur 2: schematisiert ein Lager in perspektivischer Darstellung,
- Figur 3: eine konkretisierte Ausführungsform einer Radaufhängung gemäß der Erfindung in Draufsicht,
- Figur 4: eine der Figur 3 entsprechende Darstellung in Rückansicht, und
- Figur 5: eine den Figuren 3 und 4 entsprechende Darstellung in Seitenansicht.

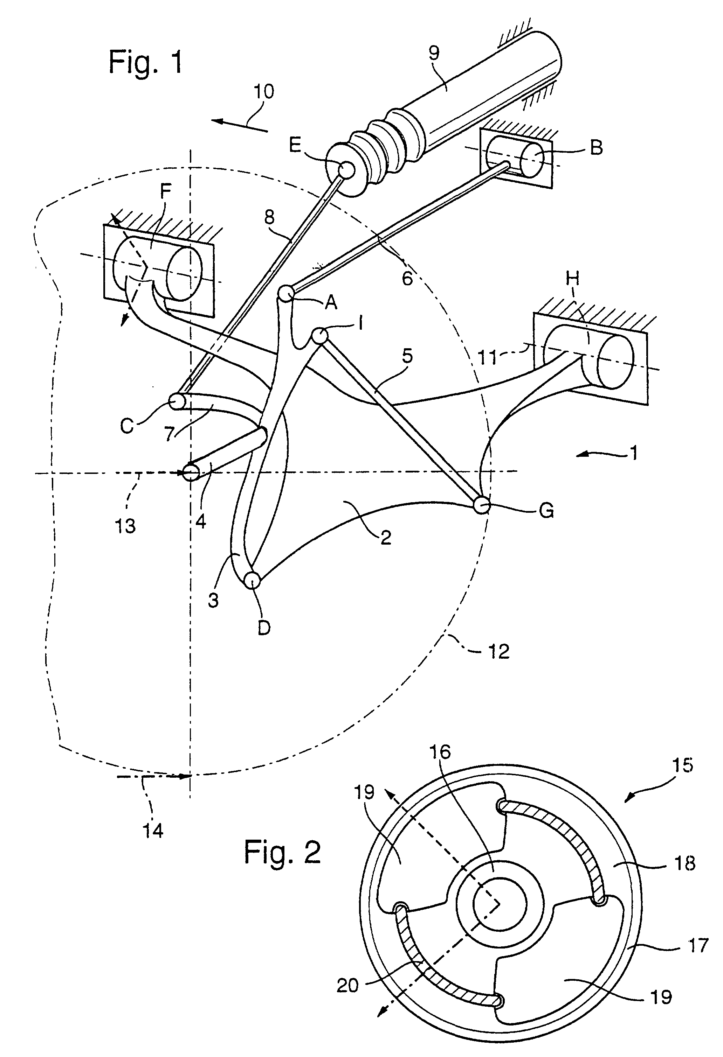

In Figur 1 ist eine insgesamt mit 1 bezeichnete Einzelradaufhängung für die gelenkten Vorderräder eines Personenkraftwagens schematisiert dargestellt, und es sind in dieser Schemadarstellung lediglich die Teile der Radaufhängung 1, nicht aber das zugehörige Fahrzeug gezeigt.

Die Radaufhängung 1 ist aufgebaut aus einem unteren Dreieckslenker 2, einem Radträger 3, einem mit dem Radträger 3 fest verbundenen Radzapfen 4, einer Koppel 5, einem Sturzlenker 6, einem am Radträger 3 starr angebrachten Spurhebel 7 und einer Spurstange 8, die über eine hier schematisch angedeutete Zahnstangenlenkung 9 beaufschlagbar ist.

Der Radträger 3 ist in Punkt A an seinem oberen Ende gelenkig mit dem Sturzlenker 6 verbunden, der seinerseits über ein hier nicht weiter dargestelltes Zapfengelenk in üblicher Weise elastisch in einem Punkt B mit der Karosserie des Fahrzeuges verbunden ist. Der am Radträger 3 angebrachte Spurhebel 7 ist gelenkig in einem Punkt C mit der Spurstange 8 verbunden, die ihrerseits gelenkig in einem Punkt E mit der Zahnstangenlenkung 9 verbunden ist. Am unteren Ende ist der Radträger 3 in einem Punkt D mit dem Dreieckslenker 2 verbunden, der seinerseits über nicht weiter dargestellte Zapfengelenke in den Punkten F und H karosserieseitig angelenkt ist, wobei die Punkte F und H die Drehachse 11 für den Dreieckslenker 2 bestimmen, die sich im Wesentlichen in Fahrzeuglängsrichtung, bzw. Fahrtrichtung (Pfeil 10) erstreckt. Im Hinblick darauf, daß der Sturzlenker 6 im Wesentlichen nur in seiner Längserstreckung wirkende Kräfte abfangen kann, ist der Radträger 3 zusätzlich über die Koppel 5 gegenüber dem Dreieckslenker 2 abgestützt, wobei die entsprechenden Anlenkpunkte mit G und I bezeichnet sind.

Der Anlenkpunkt D des Radträgers 3 am Dreieckslenker 2 spannt zusammen mit dem Anlenkpunkt A zwischen dem Radträger 3 und dem Sturzlenker 6 und dem Anlenkpunkt B des Sturzlenkers 6 an der Karosserie eine Ebene auf, die sich, grob betrachtet, aufrecht und in Fahrzeugquerrichtung erstreckt. Diese Ebene wird im Folgenden als erste Ebene bezeichnet. Eine im Folgenden als zweite Ebene bezeichnete Ebene wird von dem Anlenkpunkt D des Radträgers 3 am Dreieckslenker 2 und dem Anlenkpunkt G der Koppel 5 an diesem Dreieckslenker 2 sowie dem Anlenkpunkt I der Koppel 5 am Radträger 3 aufgespannt. Die Schnittlinie dieser Ebenen, die hier nicht gezeigt ist, bestimmt eine virtuelle Lenkachse, die bei der erfindungsgemäßen Lösung nicht nur durch den ersichtlich beiden Ebenen zugehörenden Anlenkpunkt D des Radträgers 3 am Dreieckslenker 2 verläuft, sondern auch durch den Anlenkpunkt A des Radträgers 3 am Sturzlenker 6, so daß die Punkte A und D jeweils in beiden Ebenen liegen und die besagte virtuelle Achse mit der durch die Punkte A und D bestimmten Drehachse des Radträgers 3 zusammenfälllt, die ihrerseits im Raum über die Koppel 5 bei Lenk- und Federbewegungen in ihrer Lage verändert wird. Dadurch, daß die Schnittlinie der ersten und der zweiten Ebene, die die virtuelle Lenkachse bestimmt, mit der durch die Punkte A und D bestimmten Drehachse des Radträgers 3 zusammenfällt, bewirken in Richtung der Ebenen wirkende Kräfte, insbesondere auch phasenversetzte dynamische Kräfte, die über die Koppel 5 und/oder den Sturzlenker 6 eingeleitet werden, keine Momente auf die Drehachse des Radträgers 3, und haben dementsprechend auch keine Lenkunruhe oder Beeinträchtigungen des Geradeauslaufes für das Rad zur Folge, das hier, mit 12 bezeichnet, lediglich in seinem ümriß dargestellt ist und auf dem Radzapfen 4 gelagert ist.

Im Sinne der Erfindung ist es dabei weiter von Vorteil, wenn die Koppel 5 eine Lage einnimmt, bei der die Koppel 5 nicht nur in der über sie mitbestimmten zweiten Ebene liegt, sondern zusätzlich eine Erstreckung aufweist, bei der die durch die Anlenkpunkte G der Koppel am Dreieckslenker 2 und I der Koppel 5 am Radträger 3 bestimmte Gerade durch den Anlenkpunkt A des Sturzlenkers 6 am Radträger 3 verläuft.

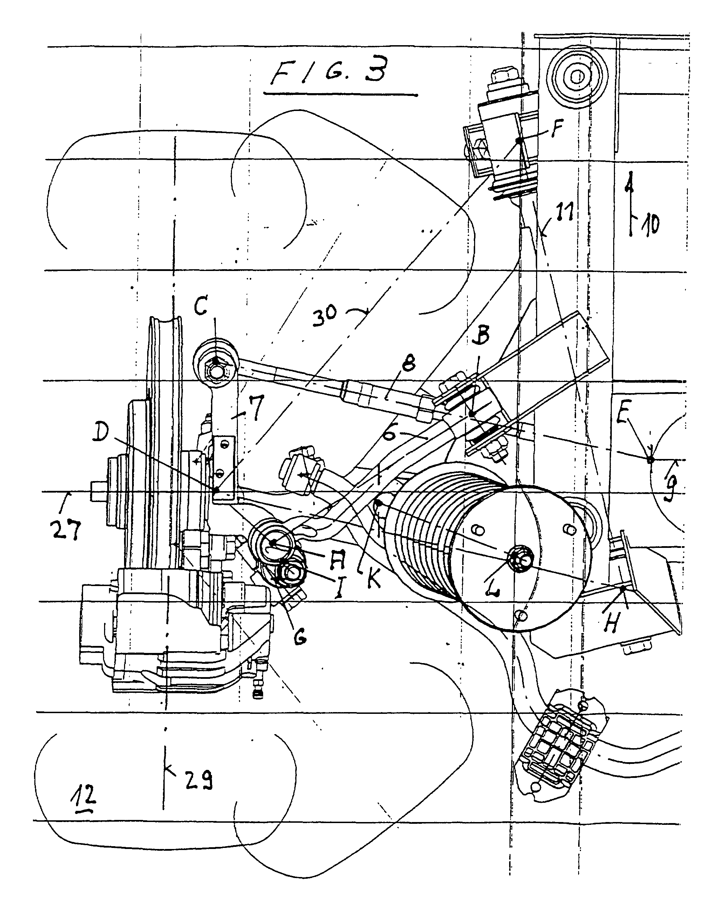

In Fahrtrichtung 10 auf den Radträger 3 wirkende Kraftkomponenten werden über die Koppel 5 auf den Dreieckslenker 2 abgestützt und haben in den in den Anlenkpunkten F und H des Dreieckslenkers 2 gegenüber der Karosserie vorgesehenen und die Drehachse 11 des Dreieckslenkers 2 bestimmenden Lagern, von denen eines in Figur 2 dargestellt ist, Abstützkräfte zur Folge, die für die über den Radzapfen 4 eingeleiteten Stoßkräfte 13 (strichliert dargestellt) und für die über den Radumfang eingeleiteten Bremskräfte 14 (strichpunktiert dargestellt) im wesentlichen mit unterschiedlichen Winkeln zueinander wirken und die unter dem Gesichtspunkt des Komforts und des Fahrverhaltens unterschiedlich und, soweit möglich, ohne wechselseitige Beeinflussung abgefangen werden sollten, nämlich für die Bremskräfte härter als für die Stoßkräfte. Im Hinblick darauf erweist es sich als zweckmäßig, zumindest im Anlenkpunkt F, bevorzugt aber in den Anlenkpunkten F und H an sich bekannte elastische Lager einzusetzen, die in unterschiedlichen Richtungen unterschiedliche Elastizitäten aufweisen, so beispielsweise bekannte Lager mit nierenförmigen Aussparungen, bei denen die nierenförmigen Aussparungen quer zur Stoßrichtung verlaufen und die die Bremskräfte abfangenden Lagersegmente in Vollmaterial, gegebenenfalls mit metallischen Einlagen verstärkt ausgebildet sind.

Ein solches Lager wird anhand Figur 2 noch näher erläutert. Bei einer Radaufhängung der hier gezeigten Art ergibt sich eine aus der Bremskraft 14 resultierende Belastung in dem dem vorderen Anlenkpunkt F des Dreieckslenkers 2 zugeordneten Lager, die schräg nach unten gerichtet ist, und eine aus der Stoßkraft 13 resultierende Belastung mit Orientierung schräg nach oben, was eine entsprechende Ausrichtung der elastischen Lager bedingt. Hierdurch ist es möglich, unabhängig von der Höhe der Bremsverzögerung im Wesentlichen immer die notwendigen elastischen Federwege zur Abfederung von dem Bremsvorgang überlagerten Stoßvorgängen aufrecht zu erhalten.

Ein Lager der vorbesprochenen Art ist schematisiert als Figur 2 vorsorglich gezeigt und insgesamt mit 15 bezeichnet. Es weist eine zentrale Buchse 16 auf, und zwischen der Buchse 16 und dem Mantel 17 eine elastische Einlage 18, in der nierenförmige Aussparungen 19 vorgesehen sind, die sich bezogen auf das Zentrum der Buchse gegenüberliegen und die, in Umfangsrichtung gesehen, zwischen sich Bereiche höherer Steifigkeit, insbesondere in Vollmaterial ausgeführte Bereiche einschließen, die gegebenenfalls über metallische Einlagen 20 versteift sind. Entsprechend den im Lager 15 im Wesentlichen senkrecht zueinander stehenden, aus Stoßkräften 13 und Bremskräften 14 resultierenden Belastungsrichtungen ist auch der Aufbau des Lagers derart, daß dessen Zonen unterschiedlicher Nachgiebigkeit im Wesentlichen senkrecht zueinander stehen.

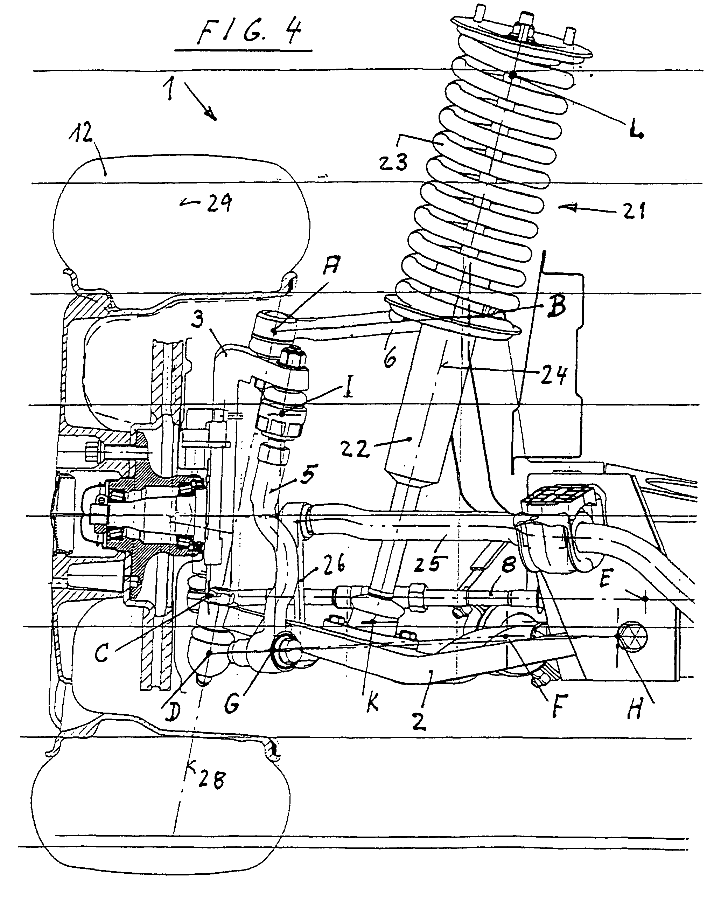

In den Figuren 3 bis 5 ist eine mögliche, und im Rahmen der Erfindung bevorzugte Ausführungsform einer Radaufhängung für Vorderräder von Fahrzeugen gezeigt, wobei auch diese zeichnerischen Darstellungen stark schematisiert sind und auf die Darstellung von Karosserieteilen des Fahrzeuges im Wesentlichen ebenso verzichtet wurde wie auf für das Verständnis der Erfindung nicht unbedingt erforderliche Details der Radaufhängung und der Räder. Im übrigen wurde für die Bezeichnung der Teile in den Figuren 3 bis 5 auf die Bezeichnungen gemäß Figur 1 zurückgegriffen, so daß einander entsprechende Teile mit gleichen Bezugszeichen versehen sind und die Erläuterung auf zusätzlich ersichtliche oder abweichende Details beschränkt bleiben kann.

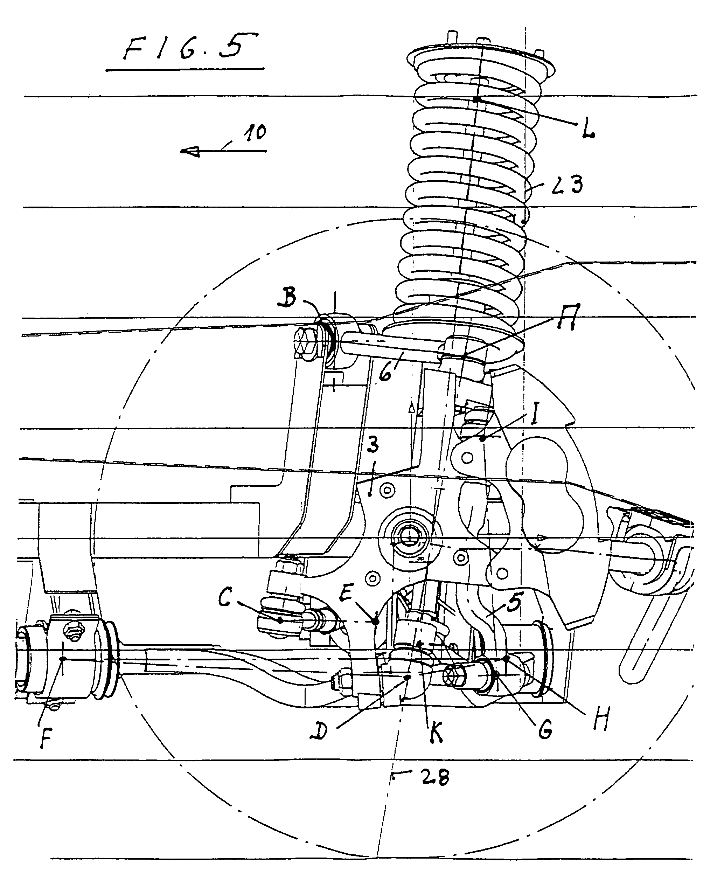

ergänzend zu Figur 1 ist in den Figuren 3 bis 5 die Feder-Dämpfer-Kombination 21 gezeigt, bestehend aus dem Stoßdämpfer 22 und der in dessen oberen Bereich diesen umgebenden Feder 23, wobei Stoßdämpfer 22 und Feder 23 gemeinsam gegenüber Karosserie und Dreieckslenker 2 abgestützt sind und die jeweiligen Anlenkpunkte mit K und L bezeichnet sind, wobei der Anlenkpunkt K in der Verbindung der Feder-Dämpfer-Kombination 21 mit dem Dreieckslenker 2 liegt. Bei horizontalem Verlauf der Drehachse 11 des Dreieckslenkers 2 und in Draufsicht gemäß Figur 3 gegebener Neigung schräg nach vorne und außen unter einem Winkel von etwa 15° zur Fahrzeuglängsmittelebene ist die Achse 24 der Feder-Dämpfer-Kombination 21 in der Rückansicht gemäß Figur 4 unter einem Winkel von etwa 15° schräg nach oben und innen verlaufend angeordnet, bei etwa gleicher Neigung, also einer Neigung von ebenfalls etwa 15° in Seitenansicht schräg nach hinten und oben (Figur 3).

Ferner zeigen Figuren 3 bis 5 die Anordnung des Stabilisators 25, der über eine Pendelstütze 26 mit dem Dreieckslenker 2 verbunden ist. Die Anlenkung der Pendelstütze 26 erfolgt dabei im Wesentlichen in der gleichen Längsebene wie die Anlenkung der Koppel 5, aber bezogen auf die in Figur 3 mit 27 bezeichnete Radmittenquerebene in Fahrtrichtung 10 leicht gegenüber dieser nach vorne versetzt, während die Koppel 5, bezogen auf die Fahrtrichtung 10, hinter der Radmittenquerebene 27 liegt. In Rückansicht verläuft der Stabilisator 25 im Bereich der Radaufhängung gegenüber dem Dreieckslenker 2 nach oben versetzt, und bei U-förmiger Grundform des Stabilisators 25, wie Figur 3 zeigt, mit seinem gegen die Pendelstütze 26 auslaufenden Schenkel schräg nach vorne und außen, etwa unter einem Winkel von 45°.

Bezogen auf die Radmittenquerebene 27 und die Fahrtrichtung 10 liegt der rückwärtige Anlenkpunkt H des Dreieckslenkers 2 hinter der Radmittenquerebene 27, der vordere Anlenkpunkt F dagegen um ein Mehrfaches gegenüber der Radmittenquerebene 27 nach vorne verlagert. Der Abstand des Anlenkpunktes F zur Radmittenquerebene 27 ist etwa sechsmal größer als der Abstand des Anlenkpunktes H, in Gegenrichtung gemessen. Die Abstützung der Feder-Dämper-Kombination 21 gegenüber dem Dreieckslenker 2 erfolgt ebenso wie die Anlenkung der Pendelstütze 26 nahe der Radmittenquerebene 27, in der der Anlenkpunkt D des Dreieckslenkers 2 am Radträger 3 liegt. Der Lenkspurhebel 7 erstreckt sich in Fahrtrichtung 10 nach vorne, und der Anlenkpunkt C der Spurstange 8 am Lenkspurhebel 7 ist in Seitenansicht gegenüber dem Anlenkpunkt E der Spurstange 8 an der Zahnstangenlenkung 9 in Fahrtrichtung 10 nach vorne versetzt, wobei in Draufsicht die Spurstange 8 die Achse des Sturzlenkers 6 nahezu im Anlenkpunkt B des Sturzlenkers 6 an der Karosserie kreuzt. Die Verbindungsgerade zwischen dem Anlenkpunkt D des Dreieckslenkers 2 am Radträger 3 mit dem vorderen karosserieseitigen Anlenkpunkt F des Dreieckslenkers 2, die mit 30 bezeichnet ist, verläuft unter einem Winkel von etwa 50° zur Radmittenquerebene 27 schräg nach vorne und innen. Die Neigung des Sturzlenkers 6 gegenüber der Radmittenquerebene 27 ist mit etwa 35° etwas flacher. In Rückansicht verläuft der Sturzlenker 6 leicht ansteigend nach vorne innen nahezu horizontal, und die Länge des Sturzlenkers 6 ist etwas größer als die halbe radiale Länge des Dreieckslenkers 2. In Draufsicht liegt der Anlenkpunkt A des Sturzlenkers 6 am Radträger 3 nahezu auf einer Linie mit den Anlenkpunkten I und G der Koppel 5 am Radträger 3 und am Dreieckslenker 2, wobei die Verbindungsgerade zwischen den angesprochenen Anlenkpunkten G, I und A unter etwa 40° zu einer Fahrzeugquerebene schräg nach vorne und außen verläuft. Die Koppel 5 erstreckt sich zwischen ihren Anlenkpunkten G und I in Rückansicht vertikal und in Seitenansicht mit Neigung von wenigen Grad in Fahrtrichtung nach oben vorne, so daß insgesamt eine nahezu vertikale Erstreckung der Koppel gegeben ist.

Die durch die Anlenkpunkte A und D des Radträgers 3 an Sturzlenker 6 und Dreieckslenker 2 gegebene Drehachse 28 des Radträgers 3 durchstößt die Bodenebene mit geringem Abstand zur Fahrzeuglängsmitte hin versetzt nahe der Radmittenlängsebene 29, so daß ein kleiner positiver Lenkrollradius gegeben ist und zwar bei positivem Nachlauf, wobei die Neigung der Drehachse 28 des Radträgers 3, die durch die Anlenkpunkte A und D bestimmt ist, in Seitenansicht etwa 10° gegenüber der Radmittenquerebene 27 beträgt.

Die durch die Anlenkpunkte D, G, I aufgespannte zweite Ebene schneidet die durch die Anlenkpunkte D, A, B aufgespannte erste Ebene im wesentlichen in einer Schnittlinie, die mit der Drehachse 28 zusammenfällt, so daß die Drehachse 28 quasi mit der durch den Schnittpunkt der besagten Ebenen gebildeten virtuellen Drehachse zusammenfällt. Zudem liegen die Anlenkpunkte G und I der Koppel 5 am Dreieckslenker 2 und am Radträger 3 mit dem Anlenkpunkt A des Sturzlenkers 6 am Radträger 3 nahezu auf einer Linie, so daß optimale Abstützverhältnisse gegeben sind.

Dies gilt auch im Hinblick auf die Bremsnickabstützung und Nachlaufänderungen, die durch die Lage der Drehachse 11 des Dreieckslenkers 2 günstig beeinflußt sind. Ferner hat die geschilderte Ausgestaltung der Radaufhängung günstige Auswirkungen auf das Geradeausfahrverhalten des Fahrzeuges und die Lenkruhe bei geringen Lenkeinschlägen. Durch die sich ergebende Verlagerung der Lenkachse nach hinten bei größer werdenden Lenkeinschlägen wird ferner eine Vergrößerung der Nachlaufstrecke erreicht, die zu einer Vergrößerung des Rückstellmomentes auf die Geradeausstellung des Rades führt und auch die Lenkstabilität verbessert.

## Patentansprüche

1. Einzelradaufhängung (1) für gelenkte Räder (12) von Kraftfahrzeugen, insbesondere Personenkraftwagen, in Form einer DreiLenker-Koppelachse mit einem unteren Dreieckslenker (2), der eine in Fahrzeuglängsrichtung verlaufende karosserieseitige Drehachse (11) aufweist, die durch ein bezogen auf die Fahrtrichtung (10) vorderes Lenkerlager (F) und ein rückwärtiges Lenkerlager (H) bestimmt ist, und der seitlich nach außen zu seiner Drehachse versetzt gelenkig mit einem Radträger (3) verbunden ist, mit einer Führung des Radträgers (3) in seinem oberen Endbereich über einen bezogen auf die Fahrtrichtung (10) hinter der Radmittenquerebene gelenkig mit dem Radtträger (3) verbundenen, karosserieseitig angelenkten Sturzlenker (6) und mit einer Radträger (3) und Dreieckslenker verbindenden Koppel (5), die, bei Erstreckung in Hochrichtung, bezogen auf die Fahrtrichtung (10) hinter der Radmittenquerebene in ihrem oberen Endbereich mit dem Radträger (3) und in ihrem unteren Endbereich mit dem Dreieckslenker (2) gelenkig verbunden ist, sowie mit einem vom Radträger (3) abragenden und gelenkig mit einer Spurstange (8) verbundenen Spurhebel (7), wobei durch den Anlenkpunkt (D) des Radträgers (3) am Dreieckslenker (2) und die Anlenkpunkte (A, B) des Sturzlenkers (6) eine erste Ebene und durch den Anlenkpunkt (D) des Radträgers (3) am Dreieckslenker (2) und die Anlenkpunkte (G, I) der Koppel (5) eine zweite Ebene aufgespannt ist,
**dadurch gekennzeichnet,**
**daß** die durch den Anlenkpunkt (D) des Radträgers (3) am Dreieckslenker (2) und die Anlenkpunkte (A, B) des Sturzlenkers (6) aufgespannte erste Ebene und die durch den Anlenkpunkt (D) des Radträgers (3) am Dreieckslenker (2) und die Anlenkpunkte (G, I) der Koppel (5) aufgespannte zweite Ebene eine Schnittlinie aufweisen, die ausgehend von dem beiden Ebenen gemeinsamen Anlenkpunkt (D) des Radträgers (3) am Dreieckslenker (2) im oberen Bereich des Radträgers (3) zumindest nahezu durch den Anlenkpunkt (A) des Radträgers (3) am Sturzlenker (6) verläuft und daß in Draufsicht, bei aufrechter Erstreckung der Koppel 5, die Verbindungsgerade zwischen den Anlenkpunkten (I bzw. A) der Koppel (5) am Radträger (3) und des Radträgers (3) am Sturzlenker (6) unter einem sich in Fahrtrichtung (10) nach außen öffnenden Winkel von etwa 45° zur Fahrzeuglängsachse verläuft.

2. Einzelradaufhängung nach Anspruch 1,
**dadurch gekennzeichnet,**
**daß** der Anlenkpunkt (A) des Sturzlenkers (6) am Radträger (3) näher zur Radmittenquerebene (27) liegt als der Anlenkpunkt (I) der Koppel (5) am Radträger (3).

3. Einzelradaufhängung nach Anspruch 2,
**dadurch gekennzeichnet,**
**daß** die durch die Anlenkpunkte (G, I) der Koppel (5) bestimmte Gerade durch den Anlenkpunkt (A) des Radträgers (3) am Sturzlenker (6) zumindest nahezu verläuft.

4. Einzelradaufhängung nach einem der vorhergehenden Ansprüche,
**dadurch gekennzeichnet,**
**daß** die Drehachse (11) des Dreieckslenkers (2) unter einem Winkel von etwa 15° zur Fahrzeuglängsachse verläuft.

5. Einzelradaufhängung nach einem der vorhergehenden Ansprüche,
**dadurch gekennzeichnet,**
**daß** der bezogen auf die Fahrtrichtung (10) vordere Anlenkpunkt (F) und der rückwärtige Anlenkpunkt (H) des Dreieckslenkers (2) auf verschiedenen Seiten der Achsmittenquerebene (27) liegen und daß der Abstand des vorderen Anlenkpunktes (F) zur Radmittenquerebene (27) ein mehrfaches des Abstandes des rückwärtigen Anlenkpunktes (H) zur Radmittenquerebene (27) beträgt.

6. Einzelradaufhängung nach einem der vorhergehenden Ansprüche,
**dadurch gekennzeichnet,**
**daß** die Koppel (5) nahezu vertikal verläuft.

7. Einzelradaufhängung nach einem der vorhergehenden Ansprüche,
**dadurch gekennzeichnet,**
**daß** die durch die Anlenkpunkte (D, I, G) des Radträgers (3) am Dreieckslenker (2) und der Koppel (5) aufgespannte zweite Ebene nahezu vertikal steht.

8. Einzelradaufhängung nach einem der vorhergehenden Ansprüche,
**dadurch gekennzeichnet,**
**daß** der Sturzlenker (6) von seinem Anlenkpunkt (A) am Radträger (3) schräg nach vorne und innen verläuft.

9. Einzelradaufhängung nach Anspruch 8,
**dadurch gekennzeichnet,**
**daß** der Sturzlenker (6) einen Winkel von etwa 55° mit der Fahrzeuglängsachse einschließt.

10. Einzelradaufhängung nach einem der vorhergehenden Ansprüche,
**dadurch gekennzeichnet,**
**daß** der Anlenkpunkt (D) des Radträgers (3) am Dreieckslenker (2) zumindest nahezu in der Radmittenquerebene (27) liegt.

11. Einzelradaufhängung nach einem der vorhergehenden Ansprüche,
**dadurch gekennzeichnet,**
**daß** der Spurhebel (7) vom Radträger (3) in Fahrtrichtung (10) nach vorne verläuft.

12. Einzelradaufhängung nach einem der vorhergehenden Ansprüche,
**dadurch gekennzeichnet,**
**daß** die Spurstange (8) vom Spurhebel (7) unter einem flachen Winkel zu einer Fahrzeugquerebene schräg nach hinten und innen verläuft.

13. Einzelradaufhängung nach einem der vorhergehenden Ansprüche,
**dadurch gekennzeichnet,**
**daß** in Draufsicht die Achse der Spurstange (8) in etwa durch den karosserieseitigen Anlenkpunkt (B) des Sturzlenkers verläuft.

14. Einzelradaufhängung nach einem der vorhergehenden Ansprüche,
**dadurch gekennzeichnet,**
**daß** die radiale Schwenklänge des Sturzlenkers (6) etwa der halben radialen Schwenklänge des Dreieckslenkers (2) entspricht.

15. Einzelradaufhängung nach einem der vorhergehenden Ansprüche,
**dadurch gekennzeichnet,**
**daß** der Dreieckslenker (2) über eine Feder-Dämpfer-Kombination (21) gegen die Karosserie abgestützt ist und daß der Anlenkpunkt (K) der Feder-Dämpfer-Kombination (21) gegenüber dem Dreieckslenker (2) nahe der Radmittenquerebene (27) liegt.

16. Einzelradaufhängung nach Anspruch 15,
**dadurch gekennzeichnet,**
**daß** die Achse (24) der Feder-Dämpfer-Kombination (21) in der Rückansicht unter einem Winkel von etwa 15° schräg nach oben und innen verläuft.

17. Einzelradaufhängung nach Anspruch 15 oder 16,
**dadurch gekennzeichnet,**
**daß** die Achse (24) der Feder-Dämpfer-Kombination (21) in Seitenansicht unter einem Winkel von etwa 15° schräg nach hinten und oben verläuft.

## Claims

1. An independent suspension system (1) for steered wheels (12) of motor vehicles, in particular passenger cars, in the form of a triple link coupled axle with a lower wishbone (2) which has an axis of rotation (11) running along the length of the vehicle on the body side which is determined by a front suspension bearing (F) in relation to the direction of travel (10) and a rear suspension bearing (H) and which is connected laterally and offset externally in relation to a steering knuckle (3) in the manner of an articulated joint, with guidance of the steering knuckle (3) at its upper end by means of a body-side coupled camber link (6) which is connected to the steering knuckle (3) behind the transverse wheel centre plane in relation to the direction of travel (10) in the manner of an articulated joint, with a connecting rod (5) connecting a steering knuckle (3) and wishbone (2), the upper end of which, when extended vertically, is connected to the steering knuckle (3) behind the transverse wheel centre plane in relation to the direction of travel (10), and the lower end of which is connected to the wishbone (2), both in the manner of an articulated joint, and with a steering arm (7) which projects out from the steering knuckle (3) and is connected with a tie rod (8) in the manner of an articulated joint, with joint (D) between the steering knuckle (3) and the wishbone (2) and joints (A) and (B) on the camber link (6) forming a first plane and joint (D) between the steering knuckle (3) and the wishbone (2) and joints (G) and (I) on the connecting rod (5) forming a second plane,
**characterised in that**
the first plane formed by joint (D) between the steering knuckle (3) and the wishbone (2) and joints (A) and (B) on the camber link (6) and the second plane formed by joint (D) between the steering knuckle (3) and the wishbone (2) and joints (G) and (I) on the connecting rod (5) have an intersection line which runs from joint (D) between the steering knuckle (3) and the wishbone (2) on the upper part of the steering knuckle (3) which is common to both planes at least almost through joint (A) between the steering knuckle (3) and the camber link (6) and that, in a top view, with the connecting rod (5) extending upwards, the straight line connecting the joints (I) between the connecting rod (5) and the steering knuckle (3) and (A) between the steering knuckle (3) and the camber link (6) runs at angle of approx. 45° to the longitudinal axis of the vehicle opening outwards in the direction of travel (10).

2. An independent suspension system in accordance with claim 1,
**characterised in that**
the joint (A) between the camber link (6) and the steering knuckle (3) lies closer to the transverse wheel centre plane (27) than the joint (I) between the connecting rod (5) and the steering knuckle (3).

3. An independent suspension system in accordance with claim 2,
**characterised in that**
the straight line determined by the joints (G) and (I) on the connecting rod (5) runs at least almost through the joint (A) between the steering knuckle (3) and the camber link (6).

4. An independent suspension system in accordance with one of the preceding claims,
**characterised in that**
the axis of rotation (11) of the wishbone (2) runs at an angle of approx. 15° to the longitudinal axis of the vehicle.

5. An independent suspension system in accordance with one of the preceding claims,
**characterised in that**
the front joint (F) in relation to the direction of travel (10) and the rear joint (H) on the wishbone (2) lie on different sides of the transverse axle centre plane (27) and that the distance between the front joint (F) and the transverse wheel centre plane (27) is a multiple of the distance between the rear joint (H) and the transverse wheel centre plane (27).

6. An independent suspension system in accordance with one of the preceding claims,
**characterised in that**
the connecting rod (5) runs almost vertically.

7. An independent suspension system in accordance with one of the preceding claims,
**characterised in that**
the second plane formed by joints (D), (I), (G) between the steering knuckle (3) and the wishbone (2) and the connecting rod (5) is almost vertical.

8. An independent suspension system in accordance with one of the preceding claims,
**characterised in that**
the camber link (6) runs forwards and inwards at an angle from its joint (A) with the steering knuckle (3).

9. An independent suspension system in accordance with one of the preceding claims,
**characterised in that**
the camber link (6) forms an angle of approx. 55° with the longitudinal axis of the vehicle.

10. An independent suspension system in accordance with one of the preceding claims,
**characterised in that**
the joint (D) between the steering knuckle (3) and the wishbone (2) lies at least almost in the transverse wheel centre plane (27).

11. An independent suspension system in accordance with one of the preceding claims,
**characterised in that**
the steering arm (7) runs from the steering knuckle (3) forwards in the direction of travel (10).

12. An independent suspension system in accordance with one of the preceding claims,
**characterised in that**
the tie rod (8) runs from the steering arm (7) at an angle rearwards and inwards at a flat angle to a transverse plane of the vehicle.

13. An independent suspension system in accordance with one of the preceding claims,
**characterised in that**
in a top view the axis of the tie rod (8) runs approximately through the joint (B) on the body side of the camber link (6).

14. An independent suspension system in accordance with one of the preceding claims,
**characterised in that**
the radial pivoting length of the camber link (6) corresponds to approximately half the radial pivoting length of the wishbone (2).

15. An independent suspension system in accordance with one of the preceding claims,
**characterised in that**
the wishbone (2) is supported in relation to the body by a spring/damper combination (21) and that the joint (K) between the spring/damper combination (21) and the wishbone (2) lies near to the transverse wheel centre plane (27).

16. An independent suspension system in accordance with claim 15,
**characterised in that**
in a rear view the axis (24) of the spring/damper combination (21) runs upwards and inwards at an angle of approx. 15°.

17. An independent suspension system in accordance with claim 15 or 16,
**characterised in that**
in a side view the axis (24) of the spring/damper combination (21) runs backwards and upwards at an angle of approx. 15°.

## Revendications

1. Suspension indépendante (1) pour roues directrices (12) de véhicules automobiles, en particulier de voitures particulières, sous la forme d'un axe d'accouplement à trois bras comportant un bras triangulaire inférieur (2) qui comprend un axe de rotation (11) côté carrosserie s'étendant en direction longitudinale du véhicule et déterminé par un palier de bras (F) avant en sens de circulation (10) et par un palier de bras arrière (H), et qui, en décalage latéralement vers l'extérieur par rapport à son axe de rotation, est relié en articulation à un support de roue (3), comportant un guidage du support de roue (3) dans sa zone d'extrémité supérieure via un bras de carrossage (6) articulé du côté carrosserie et relié en articulation au support de roue (3) en arrière du plan transversal au centre de la roue, par rapport au sens de circulation (10), et comportant une bielle (5) qui relie le support de roue (3) et le bras triangulaire et qui, en extension en direction verticale, est reliée en arrière du plan transversal au centre de la roue en sens de circulation (10), dans sa zone d'extrémité supérieure, au support de roue (3) et dans sa zone d'extrémité inférieure au bras triangulaire (2), et comportant un levier de pincement (7) faisant saillie du support de roue (3) et relié en articulation à une barre d'accouplement (8),
dans laquelle un premier plan est défini par le point d'articulation (D) du support de roue (3) sur le bras triangulaire (2) et par les points d'articulation (A, B) du bras de carrossage (6), et un deuxième plan est défini par le point d'articulation (D) du support de roue (3) sur le bras triangulaire (2) et par les points d'articulation (G, I) de la bielle (5),
**caractérisée en ce que**
le premier plan défini par le point d'articulation (D) du support de roue (3) sur le bras triangulaire (2) et par les points d'articulation (A, B) du bras de carrossage (6), et le deuxième plan défini par le point d'articulation (D) du support de roue (3) sur le bras triangulaire (2) et par les points d'articulation (G, I) de la bielle (5) présentent une ligne d'intersection qui, en partant du point d'articulation (D) commun aux deux plans du support de roue (3) sur le bras triangulaire (2) s'étend dans la zone supérieure du support de roue (3) du moins approximativement à travers le point d'articulation (A) du support de roue (3) sur le bras de carrossage (6), et **en ce que**, en vue de dessus, en extension verticale de la bielle (5), la droite de liaison entre les points d'articulation (I ou A) de la bielle (5) sur le support de roue (3) et du support de roue (3) sur le bras de carrossage (6) s'étend sous un angle d'environ 45° par rapport à l'axe longitudinal du véhicule, angle qui s'ouvre vers l'extérieur en sens de circulation (10).

2. Suspension indépendante selon la revendication 1, **caractérisée en ce que** le point d'articulation (A) du bras de carrossage (6) sur le support de roue (3) se trouve plus près du plan transversal au centre de la roue (27) que le point d'articulation (I) de la bielle (5) sur le support de roue (3).

3. Suspension indépendante selon la revendication 2, **caractérisée en ce que** la droite déterminée par les points d'articulation (G, I) de la bielle (5) s'étend au moins approximativement à travers le point d'articulation (A) du support de roue (3) sur le bras de carrossage (6).

4. Suspension indépendante selon l'une des revendications précédentes, **caractérisée en ce que** l'axe de rotation (11) du bras triangulaire (2) s'étend sous un angle d'environ 15° par rapport à l'axe longitudinal du véhicule.

5. Suspension indépendante selon l'une des revendications précédentes, **caractérisée en ce que** le point d'articulation (F) avant en sens de circulation (10) et le point d'articulation (H) arrière du bras triangulaire (2) se trouvent sur des côtés différents du plan transversal au centre axial (27), et **en ce que** la distance entre le point d'articulation avant (F) et le plan transversal au centre de la roue (27) est un multiple de la distance entre le point d'articulation arrière (H) et le plan transversal au centre de la roue (27).

6. Suspension indépendante selon l'une des revendications précédentes, **caractérisée en ce que** la bielle (5) s'étend approximativement verticalement.

7. Suspension indépendante selon l'une des revendications précédentes, **caractérisée en ce que** le deuxième plan défini par les points d'articulation (D, I, G) du support de roue (3) sur le bras triangulaire (2) et de la bielle (5) s'étend approximativement verticalement.

8. Suspension indépendante selon l'une des revendications précédentes, **caractérisée en ce que** le bras de carrossage (6) s'étend à partir de son point d'articulation (A) sur le support de roue (3) en oblique vers l'avant et vers l'intérieur.

9. Suspension indépendante selon la revendication 8, **caractérisée en ce que** le bras de carrossage (6) forme un angle d'environ 55° avec l'axe longitudinal du véhicule.

10. Suspension indépendante selon l'une des revendications précédentes, **caractérisée en ce que** le point d'articulation (D) du support de roue (3) sur le bras triangulaire (2) se trouve du moins approximativement dans le plan transversal au centre de la roue (27).

11. Suspension indépendante selon l'une des revendications précédentes, **caractérisée en ce que** le levier de pincement (7) s'étend à partir du support de roue (3) vers l'avant en sens de circulation (10).

12. Suspension indépendante selon l'une des revendications précédentes, **caractérisée en ce que** la barre d'accouplement (8) s'étend à partir du levier de pincement (7) sous un angle aplati par rapport à un plan transversal de véhicule en oblique vers l'arrière et vers l'intérieur.

13. Suspension indépendante selon l'une des revendications précédentes, **caractérisée en ce que**, en vue de dessus, l'axe de la barre d'accouplement (8) s'étend approximativement à travers le point d'articulation (B) côté carrosserie du bras de carrossage.

14. Suspension indépendante selon l'une des revendications précédentes, **caractérisée en ce que** la longueur de pivotement radiale du bras de carrossage (6) correspond approximativement à la moitié de la longueur de pivotement radiale du bras triangulaire (2).

15. Suspension indépendante selon l'une des revendications précédentes, **caractérisée en ce que** le bras triangulaire (2) est appuyé contre la carrosserie via une combinaison ressort-amortisseur (21), et **en ce que** le point d'articulation (K) de la combinaison ressort-amortisseur (21) par rapport au bras triangulaire (2) se trouve près du plan transversal au centre de la roue (27).

16. Suspension indépendante selon la revendication 15, **caractérisée en ce que** l'axe (24) de la combinaison ressort-amortisseur (21) s'étend, en vue de derrière, sous un angle d'environ 15° en oblique vers le haut et vers l'intérieur.

17. Suspension indépendante selon l'une ou l'autre des revendications 15 et 16, **caractérisée en ce que** l'axe (24) de la combinaison ressort-amortisseur (21) s'étend, en vue latérale, sous un angle d'environ 15° en oblique vers l'arriè et vers le haut.
